# EUROPEAN PATENT SPECIFICATION

(11) **EP 4 098 426 B1**
(45) Date of publication and mention of the grant of the patent: **10.07.2024**
(21) Application number: 22167911.1
(22) Date of filing: 12.04.2022
(51) Int. Cl.: B29C 64/165, B22F 10/14, B22F 12/52, B29C 64/209, B29C 64/218, B29C 64/236, B29C 64/329, B33Y 10/00, B33Y 30/00

(54) **A MODULAR END-EFFECTOR AND SYSTEM FOR BINDER JET 3D-PRINTING USING A GANTRY, AND A COMPUTER-IMPLEMENTED METHOD**
MODULARER ENDEFFEKTOR UND SYSTEM FÜR DEN FREISTRAHL-BINDEMITTEL-3D-DRUCK MITTELS EINER BRÜCKE SOWIE EIN COMPUTERIMPLEMENTIERTES VERFAHREN
EFFECTEUR TERMINAL MODULAIRE ET SYSTÈME D'IMPRESSION 3D PAR JET DE LIANT UTILISANT UN PORTIQUE ET PROCÉDÉ MIS EN UVRE PAR ORDINATEUR

(43) Date of publication of application: 07.12.2022
(73) Proprietor: Concr3de B.V., 3089 JW Rotterdam (NL)
(72) Inventor: Baldassari, Matteo, Rotterdam (NL); Geboers, Eric, Antwerp (BE); Guzenko, Sergii, Rotterdam (NL); Menezes, Nikhil Roshal, Rotterdam (NL); Perruchon, Henri, Rotterdam (NL); Vreede, Javier, Papendrecht (NL)
(74) Representative: van Breda, Jacobus

(56) References cited:
- US-A1- 2005 280 185
- US-A1- 2010 212 584
- US-B2- 10 632 732
- US-B2- 8 021 139

## Description

The present invention relates to binder jet three-dimensional (3D) printing, also known as inkjet 3D-printing. In particular the invention relates to the modular additive manufacturing system able to deposit powder and jet droplets of fluids using a gantry or a robotic system with 2 to a maximum of 6 degrees of freedom.

### BACKGROUND ART

In inkjet printing, small drops of ink or fluid are projected directly onto a receiver surface without physical contact between the printing device and the ink-receiver. The printing device stores the printing data electronically and controls a mechanism for ejecting the drops image-wise. Printing is accomplished by moving a printhead across the ink-receiver or vice versa or both. In inkjet 3D-printing instead of ink binder fluid is projected onto a powder layer in order to form a hardened or cohesive pattern of powder granules within the powder layer. Both the powder and binder fluid can vary depending on the type of materials printed.

In early versions of inkjet 3D-printing starch and gypsum plaster were used as powder together with a binder fluid, such as water. The binder fluid would in some cases include dyes and additives to adjust viscosity, surface tension, and rheological properties to match printhead specifications. The resulting plaster parts would tend to lack strength and require infiltration by melted wax, cyanoacrylate glue, epoxy, etc. before regular handling.

Various other powder-binder combinations are also deployed to form objects by chemical or mechanical means. The resulting parts may then be subjected to different post-processing regimes, such as infiltration or bakeout. This may be done, for example, to eliminate the binder (e.g., by burning) and consolidate the core material (e.g., by melting), or to form a composite material blending the properties of powder and binder.

As of 2014, systems came to market for forming objects from sand and calcium carbonate (forming a synthetic marble), acrylic powder and cyanoacrylate, ceramic powder and using liquid binder which may chemically react with the powder or provide adhesion between powder particles to which the binder has been provided.

Three-dimensional inkjet printing is a relatively speedy and flexible printing method to produce prototype parts, tooling, and rapid manufacturing of three-dimensional complex structures directly from a CAD file. Radiation curable compositions for use in three-dimensional printing methods of complex structures are disclosed by WO 2004/096514, whereas patent documents US 8,475,946 B1 and US 2013/0157013 A1 describe examples of layer by layer ceramic material production methods.

As in many other additive manufacturing processes the part to be printed is built up from many thin cross sections of a 3D model. An inkjet printhead moves across a bed of powder, selectively depositing a liquid binding material. A thin layer of powder is then spread across the completed section. Subsequently, the bed is lowered by sinking the supporting surface into a recess of the 3D-printer and the process is then repeated with each layer adhering to the last. When the model is complete, unbound powder is removed in a process called depowdering and may be reused to some extent.

The inkjet technologies are showing enormous potential for large scale applications and high throughput. This is due to the high precision, scalability, and reliability of the technology. US 9333709 The invention is related to sand core for metal casting. The large printer is only able to deposit layers of sand and therefore very flowable material. The system is not scalable and cannot be adapted in size.

In yet another piece of prior art, US 8337736 B2, the invention relates to a method for producing conglomerate structures and apparatus. This device is made for thick layers and very large drop size. Resolution is very low, and it is made to fabricate entire houses while our systems are made to make modules, components, or moulds. The mechanical design aim at low precision and low-cost structures. Such technology stands in strong opposition to the intention of the present invention which aims at improved precision for larger structures instead. Such technology is considered fully irrelevant to the purpose of the invention.

US 10632732 B2 relates to a method and apparatus for making a three-dimensional object from powder and a binder.

US 2005/280185 A1 relates generally to rapid prototyping techniques.

### INVENTION DESCRIPTION

Inkjet 3D-printing is popular for printing objects in high detail. Inkjet 3D-printing through its material versatility allows 3D-rendered digital models and other stone, ceramic, metal, polymers, composites and cementitious three-dimensional bodies to be easily reproduced. Such reproduction has proven of immense value in the area of historical preservation and has proven to be a suitable technology to restore the Notre Dame to its former glory after a fire devastated the famous cathedral in 2019. However, conventional Inkjet 3D-printers are usually limited to producing hand-sized objects, whereas the present invention focusses on large printing objects, such as person, room, and house sized objects. In particular technical ceramics. In scale-up of the 3D-printers it was found that the precision with which layers were printed was consistently reduced. This is due to the fact that the lowerable support surface requires increasingly powerful hydraulics to facilitate its motion for which smaller adjustments are harder to control.

**Accordingly, it is an object of the present invention** to provide a printhead that is scalable to its desired use, as well as a system using such a printhead which provides a reliable printed layer thickness, that is to say layer height for objects larger than a meter in length, height and/or width. To this end there is provided a modular 3D-printing end-effector according to claim 1. It is noted that the first module is also known as a powder recoating system, the second module as a powder spreader, and the third module as an inkjet system. Each is discussed in the detailed description. The term elongated can be understood to mean a width to length ratio of between 1:2 - 1:20, and preferably 1:8-1:12 wherein the elongated support module is a hollow cuboid support beam between 0.5-6m long made of steel, stainless steel or aluminum with a sheet thickness of 8-20 mm, to protect against bending, without adding undue dynamic and static deflection on a gantry or robotic unit, such as a robotic arm. The elongated support module is also separately from the above preferably designed to allow an, in use, maximum dynamic deflection of 50 microns to ensure the high precision of the 3D printing system. Dynamic deflection is the distance with which distal ends of the elongated support module maximally deflect in response to the moving of the third module, such as in combination with the added weight of the modules. Static deformation is the distance with which distal ends of the elongated support module maximally deflect by the maximum weight of the modules.

Optionally, in accordance with the features of claim 5. The term `substantially horizontal' is understood to mean within 1 degree from absolute horizontal. The local gravitational direction provides the frame of reference for what is horizontal. In use, is given to mean the situation in which the end-effector is connected to the gantry, via the vertical arm, or to a robotic unit, via an arm, for printing. The vertical arm here corresponds to a Z-axis motion, otherwise known as vertical motion. The direction in which the elongated support module longitudinally extends is preferably the perpendicular the direction in which the head is moved in a horizontal printing motion. Optionally, the first, second and third modules are arranged on support module, so the end-effector is only suitable for printing in a single horizontal direction of movement. The direction of printing is here given to understand to be the direction in which a new layer of powder is laid down. The direction of printing is not to be misconstrued as the direction in which the inkjet system, that is to say third module, provides its binder fluid as this direction may be varied. The direction of printing is here perpendicular to the longitudinal direction of the support module. Optionally, also separately from any other option the end-effector can be chosen such that it has a maximum weight of 1000 kg which includes all parts of the end-effector including fluids and powder.

Optionally, the end-effector is provided with the features according to claim 2. The features of claim 2 allow the various modules to be slid into and out of connection with the end-effector, to allow them to be replaced with modules of different sizes. This allows the end-effector to be adjustable for printing objects at different scales without loss of precision.

To control the viscosity and meniscus and recirculation pressures of the binder fluid the end-effector may comprise an ink supply device with a heater, such as an electrical heater, which is designed to keep the binder fluid within a predetermined temperature range, such as 25 to 30 ± 2°C within said binder fluid tank. This ink supply can be a sub-tank which is connected to receive fluid from a tank external to the end-effector. Each module contains an ink supply module to regulate pressures through a venturi or a membrane pump. The system can also regulate the temperature. A temperature sensor may also be present in the tank to monitor the temperature.

The support module may beneficially act as track for the steady movement of the inkjet system. Preferably, the third module is movably connected to the face of the support module that faces rearward, whereas the first module is connected to the forward face of the support module and the second module is connected to the downward face of the support module, wherein forward is determined by the direction in which the end-effector moves in order to deposit a powder layer.

To provide increased structural support to the end-effector as well as prevent any vertical deviations at the distal ends of the support module, the features according to claim 3 are provided.

In order to facilitate plug and play functionality of the modules the modules can be provided to be locally reversibly connectable to electrical power. To this end there are provided the features according to claim 4.

**According to a second aspect of the invention** there is provided a system according to claim 6.

Preferably the system is designed for a variable layer height between 80 and 500 micron and/or a minimum average speed of 200 mm/sec in an environmental operating temperature of 15 to 25 ± 2 °C and an environment air moisture of 55 ± 5 %. This will yield the most detailed printing results.

A refiller, also known as an infiller or filling station, can be assembled with the gantry, or simply provided alongside the gantry in order to provide a steady resupply of powder to the end-effector without the end-effector needing complex vacuum or pneumatic transport systems involving powder and flexible tubes, which may be prone to failure, and dust formation. To this end there is provided a system with the features according to claim 7.

The filling station may be connected with a storage tank for powder and can therefore itself be resupplied using a pneumatic conveyor. To ensure that the powder is uniformly distributed for printing the system can be provided with features according to claim 8.

It is no surprise that the end-effector, in particular the first and second module may become contaminated with particulate residue which may interfere with the accuracy of function, especially with that of the inkjet system. To resolve this problem the system may be provided with the features of claim 9.

Optionally, the system is provided with the features according to claim 10.

This design buffers and prevents binder fluid supply interruptions to the inkjet modules and enables high density images to be printed on the powder surface. Beneficially, this flow structure also increases the accuracy with which the 3D-objects are printed as well as being less prone to failure due to the provision of redundancies. That is to say, the use of a plurality of inkjet modules. This further accelerates the speed with which a layer can be printed. The It is noted that 400 dpi for this specific embodiment corresponds to 63,5 micron being the smallest distinguishable step size. In all embodiments of the system the gantry may comprise a carriage running across a track that forms part of a raised portion of the gantry which is overhead a printing area. The track exclusively enables reversible movement of the carriage in a single horizontal direction, preferably the printing direction. Movement of the third module for printing here being exclusively horizontally perpendicular to the direction of movement of the carriage and governed locally on the end-effector. The vertical carrier arm is a vertical metal beam, and thereby provides a sturdy connection between carriage and end-effector. The carriage is provided with an actuator for reversibly raising the vertical arm in between printing strokes.

The vertical arm may be guided along a vertical track on the carriage. This allows the system to resist lateral forces on the end-effector as a result of printing, or because of the redistribution of weight, or shifting centre of mass of the end-effector during printing. A shifting centre of mass occurs when the end-effector is refilled and when the end- effector is slowly emptied of powder during printing. A reverse T-construction of end-effector and vertical arm have proven particularly steady.

**According to a third aspect of the invention** there is provided a computer implemented method for binder jet 3D printing according to claim 13.

Optionally, and beneficially, the method includes the features of claim 14 in which the filling operation is automated. Similarly, the method may comprise a step f) of cleaning the end-effector.

### DETAILED DESCRIPTION

In the example of this invention the following powder specifications are considered:
- Granulometry between 1 and 500 micron.
- Bulk Density of 800 to 6000 kg/m3.
- Angle of repose of 20 to a maximum of 46 degrees.
- Flowability: carr index 25 to 30, Hausner ratio of 0.9 to 1,6. The person skilled in the art will understand that other powder specification may also be used.

Additionally, for the binder fluid the following characteristics may be considered:
- Density of 900 to 1300 kg/m3.
- Viscosity of 7-200 cps (ambient temperature can affect this value) .
- Newtonian behaviour of the fluid.

The person skilled in the art will understand that other binder fluid specification may also be used and that density, viscosity may vary between binder fluids for cementitious, ceramic, metallic and other printing applications. Newtonian behaviour is preferable for an increased printing control.

The technical aspects of the invention are further elucidated in detail by means of the following figures:
Fig.1A shows the end-effector according to the invention;
Fig.1B shows a cross section of the end effector, refiller and cleaner;
Fig.2 shows the system of an end-effector and a gantry;
Fig.3 shows the elongated support module;
Fig.4 shows the first module, powder recoating system;
Fig.5 shows the second module, powder spreader;
Fig.6 shows the third module, inkjet system including an ink supply module, printheads and electronics components;
Fig.6B shows a diagram of inkjet system communication and electronics;
Fig.7 shows the refiller and cleaner;
Fig.8 shows another the system of a 3D-printing end-effector mounted on a different gantry;
Fig.9 shows a control diagram for printing and movement; and
Fig. 10 optional embodiments of the end-effector.

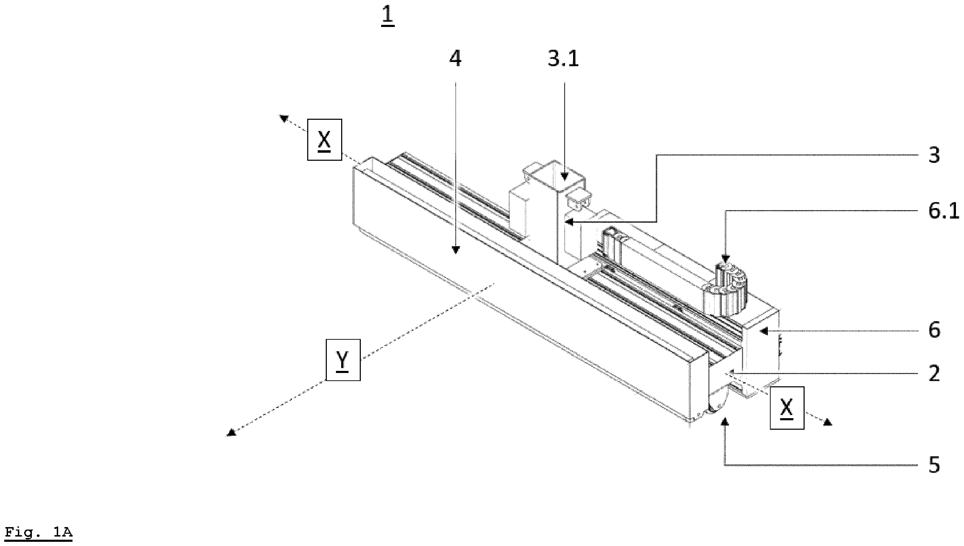

Figure 1A shows a modular end-effector 1 according to the invention for binder jet three-dimensional printing. The end-effector 1 has an elongated support module 2 which serves as a core support structure around which all other modules are connected. The support module 2 has a mounting portion 3 which is lengthwise speaking centrally provided at an upper face of the elongated support module. The central beam allows a maximum deflection over a length of 3 meters of 50 microns.

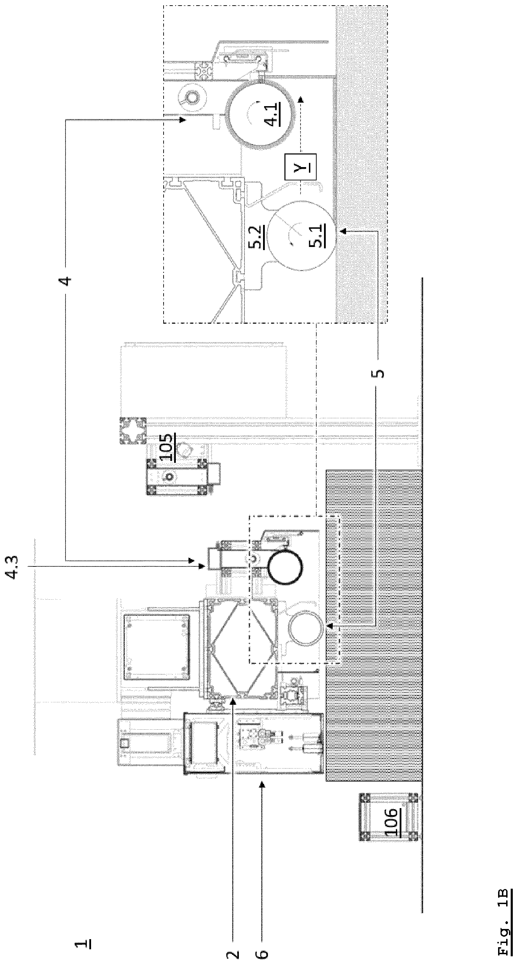

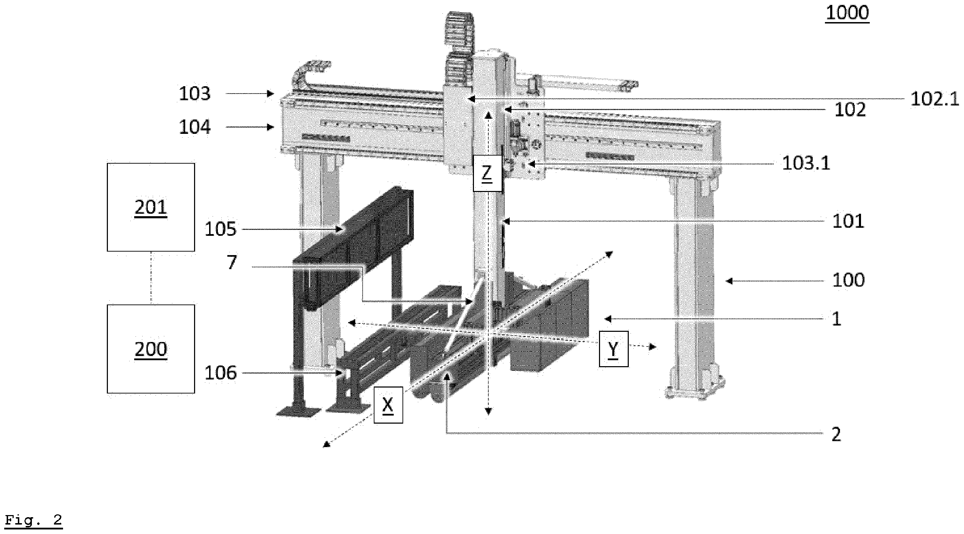

The mounting portion 3 may be integral with the module or may be a separate metal structure that can be fixedly connected to said upper face. In this example only the latter is shown. The mounting portion has a receiving portion 3.1 at an upper end for receiving a distal end of a vertical carrier arm 101 of a gantry 100. Alternatively, the mounting portion can also be integral with the vertical carrier arm 101 of the A system 1000 comprising such an arm 101 and gantry 100 are shown in Figure 2. In yet another alternative embodiment not shown herein the connection portion may be a substantially flat surface on the upper face with screw threads. Figure 1B shows the end-effector 1 in cross-section. It is noted that while not shown, the third module may also separately from this example comprise ultraviolet (UV) light emitters and/or infrared (IR) light emitters. Such feature beneficially allows the direct local heat treatment, in the case of IR, or hardening treatment, in the case of UV, of the printed layer.

In Figure 2 the end-effector 2 is to be mounted to extend in a horizontal direction X. In use, that is to say during printing, the direction X corresponds to the width of a powder bed (not shown, but customary). That is to say the width of the printing area is equal to the length of the support module. Returning to Figure 1A, three distinct printing modules can be identified, namely a first, second and third module 4, 5 and 6. The first module 4 is also known as a powder recoating system, which serves to deposit a powder layer as the end-effector is moved in a printing direction Y, in this example another horizontal direction perpendicular to horizontal direction X. The second module 5 is also known as a powder spreader and comprises a roller 5.1 for evening the height of the powder layer that is deposited by the first module 4. The third module 6 is also known as an inkjet system and is arranged for providing a binder fluid to the powder layer that has been evened by the second module to form a printed layer. Together the first, second and third module are indispensable for binder jet three-dimensional printing. The end-effector 1 has been designed for printing operation in a single direction of movement Y, which is perpendicular to the longitudinal direction of the support module X. Also, separately from this example the gantry comprises a carriage 102 that is moveable along at least one track 103 on an overhead portion 104 of the gantry 100. In this example a computer 200 with an associated human interface (201) controls, via actuators (not shown, but customary), the movement of the carriage along its track, the movement of the third module 6 along the elongated support module 2 and the movement of the vertical support arm 101. Optionally, the computer and interface are integral, such as a laptop provided with the relevant control software. The computer is in any case also arranged to control the first 4, second 5 and third module 6 as shown in Figure 1A. The computer is communicatively arranged such as via cable or wireless connection (not shown, but customary).

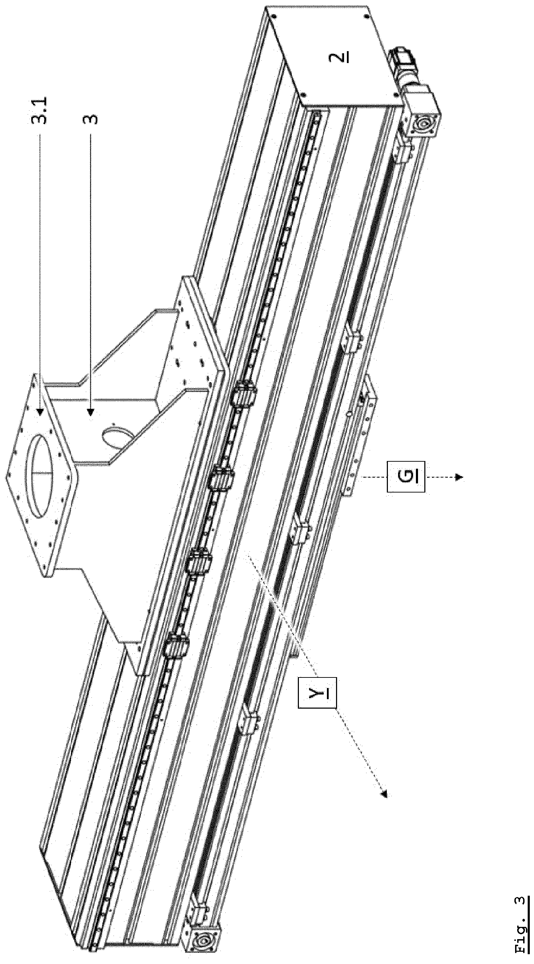

Figure 3 shows the elongated support module 2. As being formed as a cuboid support beam with first face in the direction of printing Y, a second face facing down G, and a third face opposite the direction of printing. The first module 4 is connected to the first face, the second module is connected to the second face, and the third module is connected to the third face. This setup, and any setup according to claim 1 enables the first, second and third module to pass over a same area sequentially from first to second to third and enables the simultaneous function of each of these modules in as single printing stroke. This allows each module to simultaneously print and treat a different portion of the powder layer to form the printed layer. A stroke here being a single horizontal movement of the print head for laying down a printed layer at the same vertical position.

The elongated module 2 is also called the structural beam and provides the modularity to the system, housing all modules, as aluminium profile, spreader, recoater, X-axis actuation system, Junction Box, cable chain, inkjet system and mechanical connection with Z-axis, also known as the vertical carrier arm 101. Using this structural beam, the different components can be easily taken apart for maintenance, changes or improvements. The structural beam can also host a tensioning cables 7, shown in Figure 2, to provide additional support and stiffness to the main structure and decrease the bending. The structural beam is connected to the Z-axis through a connector that can be adapted according to the gantry connection used, this feature allows to use the end effector in different types of gantry and robotic arms. In this specific case a 250 (*fixed size) x 300 (variable size) mm steel profile with a thickness of 8 to 13 mm was chosen Although, other dimensions can also be chosen. The steel profile and connection plate can be customized in height and length to fit the gantry.

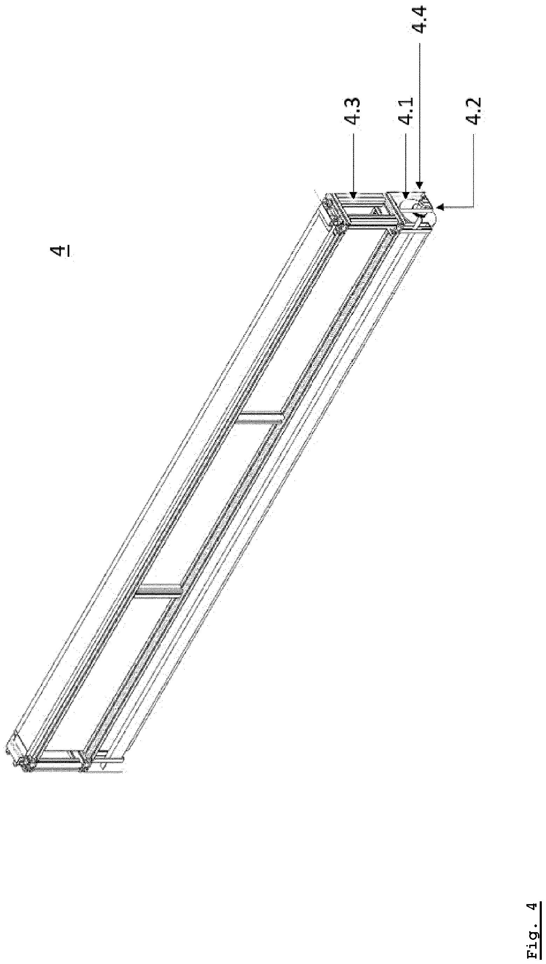

**The first module 4** is shown in greater detail in Figure 4.

The first module, also known is a the recoater unit, is responsible for depositing powder on the printing bed and ahead of the second module 5, also known as the spreader roller. To this end the first module comprises a storage container 4.3 and an adjustable powder outlet 4.2 for adjusting the amount of powder that is deposited per layer, wherein the outlet is provided with a roller 4.1 positioned underneath the container.

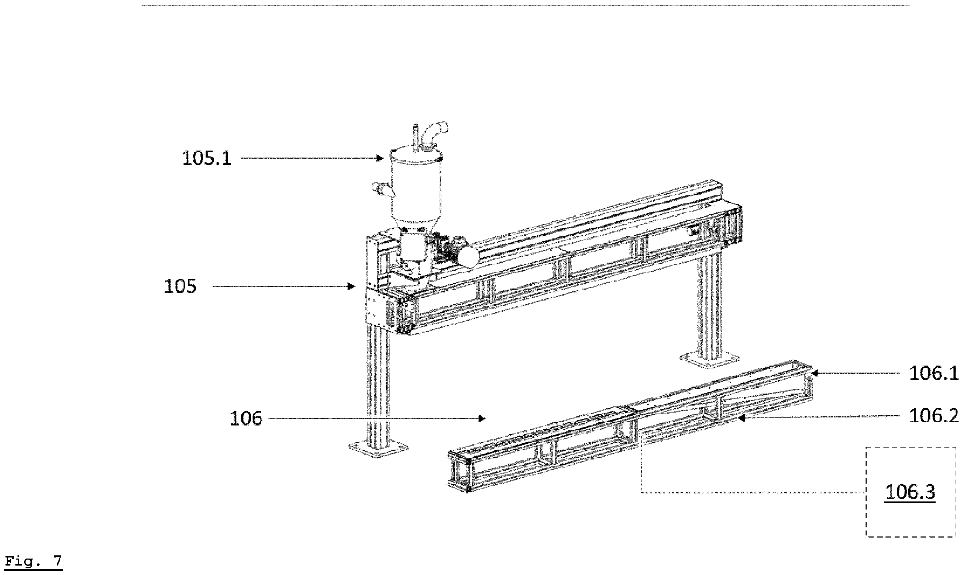

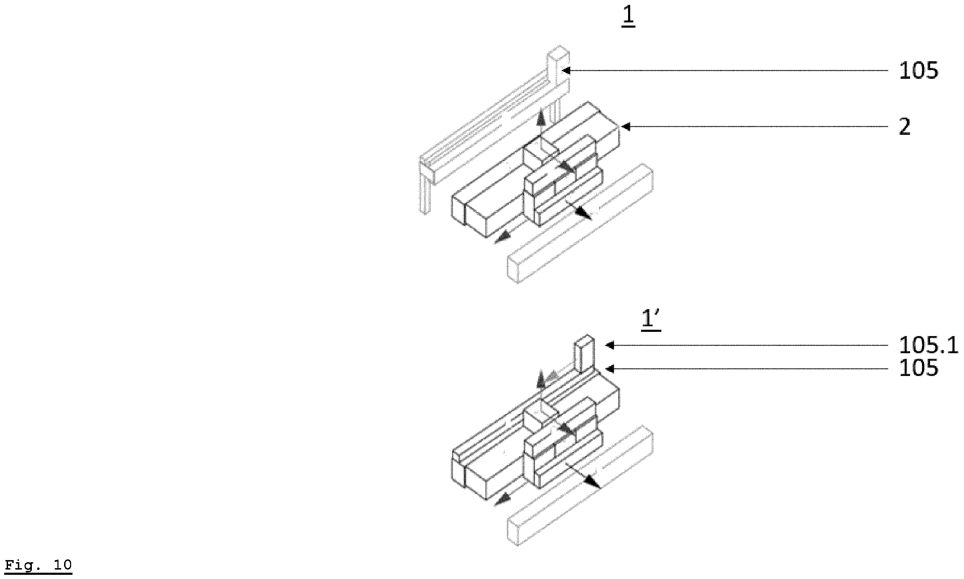

The recoater deposits very precise amounts of powder on the printing bed through the surface covered with needles between 0.5 and 6 mm, the size of the needles depends on the type of materials spreaded, the roller moves clockwise along the printing direction at a certain speed to deposit and regulate the powder amount necessary to create a precise and even layer of particulate material according to the layer height chosen. The particulate material deposited on the powder bed can have a granulometry between 1 and 500 micron, materials deposited with this technology can also have poor flowability and cohesive behaviours due to the use of needles and moving brush to transport powders. The system is designed to deposit different powder distributions and especially very fine powders like cementitious powders, ceramics and metals. The system can also use a brush to prevent powder to stick to the roller surface especially for fine and cohesive powders sticking to the needles. The brush can move horizontally through the use of pneumatic motors and a guide to allow a complete removal of the powder during rotation and deposition on the printing bed. A rotary brush can also be used for the purpose to remove powders, this option is less adviced because more prone to create powder dust clouds. To prevent powder bridging inside the container the powder recoater can also include an internal infinite screw (similar to the screw used in the infiller and represented in the new images) station to create a more homogeneous and distributed amount of powders along the X direction. In case of bridging of powders vibration motors on the walls of the container can also be used to prevent this behaviour. The features described herein above 4.1, 4.2 and 4.3 are compatible with all embodiments and may be separately isolated for inclusion in the claims. This setup beneficially replaces conventional recoater modules provided for height variable print platforms. A lateral side is provided with connection means for connecting to the first face of the support module 2 in a fixed manner. The module according to this example is further provided with sensors (not shown, but customary) that is designed to quantify the present amount of powder in the storage container in different positions along the X axis to also monitor powders bridging. Such as sensor would, in use, be communicatively connected to the computer of the system. That is to say, the sensor or combination of sensor and computer are designed to detect when the amount of powder in the module is low, such as when there is only enough powder left to lay down one or two layers. The system is then in turn designed to move end-effector to a refilling station, also known as a stationary filling station 105, shown in Figure 2 for refilling the storage container 4.3 with powder. The filling station 105 may be provided with a pneumatic conveyor unit 105.1, as shown in Figure 7, that is designed for providing powder from an external, nearby silo 105.3 to the filling station 105.Such a refilling station may be assembled with the gantry. The system may also be designed to return the end-effector to the filling station to refill the first module at an interval of 2-50 printed layers depending on size of the printer and type of material deposited. The interval of 5-15 layers is particularly beneficial is systems where refilling operation and end-effector cleaning both occur, as this leads to a more optimal process cycle. Alternatively, the filling station is integrated with the end-effector to be co-moving with the first module. This allows continuous refilling at the expense of a heavier system, which may require additional reinforcement to prevent deflection. Figure 10 shows both the end-effector 1 in which the filling station is placed to the side, and an alternative end-effector 1' in which the filling station 105 is integrated with the first module. In the latter example the pneumatic filling unit 105.1 is arranged to move along the length of the first module to fill in powder along the length of the unit. To this end, the filling unit is actuated, such as by the computer of a system. The outlet 4.2 is adjustable manually or by means of a computer-controlled actuator by i) moving or tilting a spreading wall 4.4 that is provided alongside the roller 4.1 to or from the roller and/or ii) by adjusting the proximity of the roller to the container 4.3, wherein powder exits the container between the roller 4.1 and container.

The first module is designed to, by means of the roller produce a so called "bow wave" in front of the module. Such a wave is present during printing and the module maintains a bow wave with a constant height over the length of the printing bed. The opening of the powder outlet and the rotational speed of the roller are adjustable to achieve a constant and optimized deposition over the length of the printing bed and to obtain a uniform deposition of powder on the bed for a quality print.

The recoater is fixed to the module's first face to balance the weight distribution. In one example the weight of the powder that is stored in recoater unit is ~124Kg. The total weight of the unit without the powder is approximated to be ~140Kg including roller, motors, side panels, stiffeners, and their connectors. It should be noted that this is merely one example and other weights can be chosen. If necessary, a perimetral wall can be printed together with 3D objects to avoid that deposited powder flows out from the sides while printing. The three-dimensional area within which the printer operates is the so-called bounding box boundaries can be automatically generated by the software when 3D models of the 3D objects to be printed are sliced. Sliced here being separated into distinct slices with the thickness of the to be printed layers.

The printing size can also be adjusted in Y length through the software adjusting the max size printable to avoid to waste material over the entire length of the Y axis. The software allows to define the system's maximum printing size, as long as this is within the physical limits of the gantry or robotic unit.

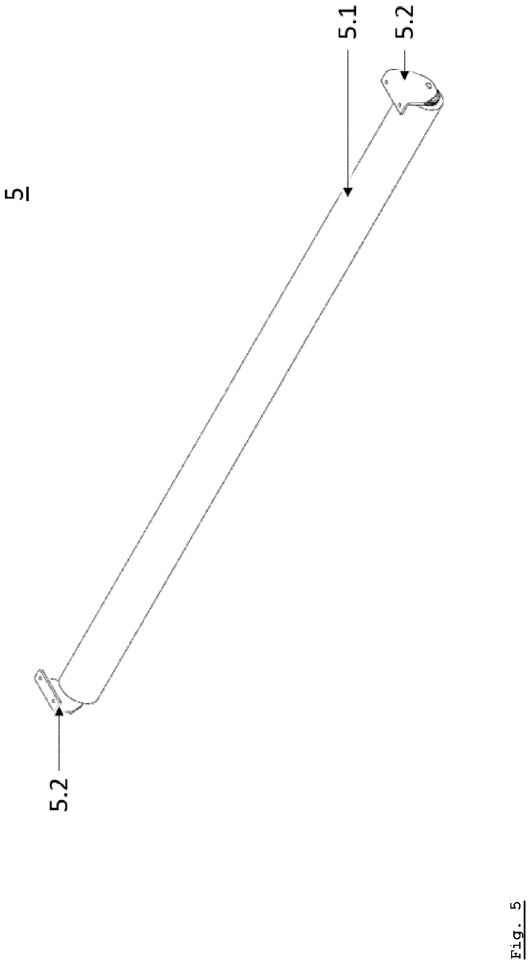

The second module 5 is shown in greater detail in Figure 5. This module has a roller 5.1 which can rotate freely around its axis. The roller has connector portions 5.2 at its distal ends with which it can be connected to the second face of the support module 2. Optionally, the roller can be replaced with a blade, such as a doctor blade, to reduce the amount of moving components and decrease the total weight. This option is beneficial for applications in which compaction of the powder is undesirable or otherwise not required. The way the first and second module cooperate is shown in Figure 1B.

Preferably, the roller is designed to have a maximum deflection of less the 100 micron and ideally less than 20 micron over 4 m. Roller precision runout should be maximum 0.110 mm over 4 m ideally 0.2 mm.

The roller spreader allows to create a very precise layer and compaction of the powder. This feature is very important to achieve compact layers with a tight particles packing. This aspect is very important especially for materials requiring high packing density on the powder bed like cementitious materials, ceramics and metals. The roller rotation counterclockwise in combination with the speed of rotation and size of the roller allows to adjust the compaction of the material on the powder bed. The density distribution in the powder bed along the densification zone, in the rolling direction. It was shown that how the layer thickness, roller geometry, and initial powder properties effect on the compacted powder relative density, which directly yields to the properties of the prototyped part. It is noted that clockwise means to rotate with the direction of motion, whereas counterclockwise means to rotate opposite the direction of motion. Herein the direction of motion being the printing direction. It should be noted that also separately from this example the first and second module each comprise a roller, wherein the rollers are designed for rotating counter to each other, in use. That is to say during printing. This is also visible in Figure 1B.

Counter rotating roller direction was chosen to avoid the cracks on the surface of the layer after jetting the liquid. Compared to the counter-rotating roller on forward direction compaction level is much higher, but the forward-rotating roller method is prone to disturbance and cracking of the new powder layer after jetting the fluid. As powder is compressed under a forward rotating roller, lumps of powder arise, that stick to the roller, leaving craters in the new layer of powder. As the presence of craters on the powder bed's surface is disastrous for the printing result, this should be always avoided. Also, the diameter and speed of the roller has a crucial influence on the powder compaction, this dimension directly affects powder layer density and porosity, we could say more in general its surface quality.

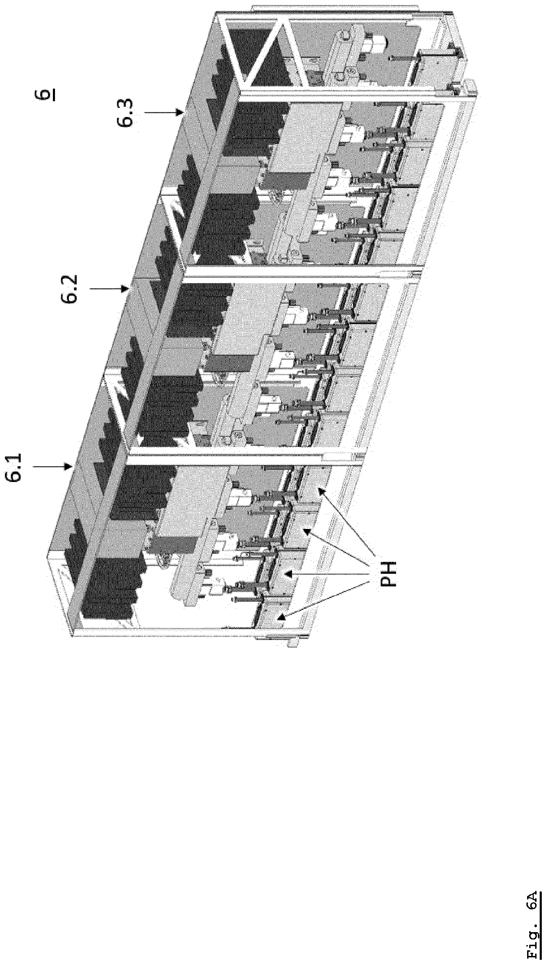

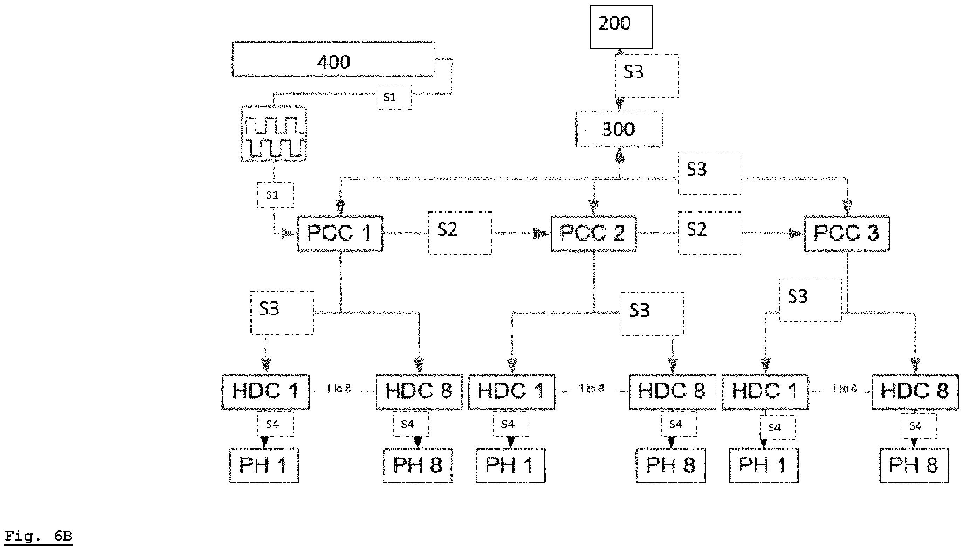

**The third module 6** is shown in greater detail in Figure 6. The third module is also called the inkjet system and in this specific case it is composed by three separate 6.1, 6.2, 6.3 sub-modules of 500 mm in width to cover a printing surface of 1500 mm in width. The inkjet module allows the ink to recirculate to avoid sedimentation of ink inside the printheads. The ink can also be degassed through a degassing membrane inside the main module.

The ink can also be heated up to 60 degrees to change the rheological properties. The distance of inkjet nozzles can vary from 30 micron to 500 micron with a variation in drop size from 40 picoliters to 10 nanoliter. Different types of inkjet modules and printheads can be used to achieve different resolution, material properties chemistries, fluid properties or layer heights.

The inkjet modules can provide fluids with the following characteristics, the fluid characteristics can be adjusted according to the application and material system chosen:
Viscosities from 3 to 200 cps.
Surface tensions from 20 to 60 dynes/cm.
Particles suspensions up to 10 micron max.

Each module has 8 piezoelectric printheads PH, one ink delivery system, 8 HDC (head driver card) and 1 PCC (inkjet controller card). HDC and PCC aren't indicated in Figure 6. The module has a removable cover, which allows the user access to the printheads PH. Each of the modules is removably connected to the set of modules and can be replaced with another module if necessary. The inkjet system is designed to move along the X-axis, n the X-direction as shown in Figure 2.The inkjet module can also be used printing along the X direction using only one module of 500 mm. This configuration in scanning mode would allow to adapt the system for other type of applications and materials, this configuration would also allow to use less printheads and electrical components compromising a bit the printing speed due to the need for more movements along the axis to reach the full coverage of the printing bed. It is noted that while ink can be provided to a binder fluid, it is not necessary to do so. In fact, wherever ink is mentioned the term binder fluid can be substituted. Figure 6B shows a diagram of inkjet system communication and electronics. The diagram shows that the computer 200 controls an electronic switch 300 which controls the PCC's, which in turn govern the HDC's, which themselves in turn govern the PH's. An external encoder further communicates to a first PCC of the first sub-submodule, which in turn communicates to the PCC of the second sub-module and so forth. There are four signal types, S1 being an encoder pulse which is passed along the various PCC's via a so called `daisy chain' S2. The person skilled in the art will know what is meant thereby. S3 is a signal via ethernet and S4 is a signal via dual HIB or so-called Head Interface Board. Another architecture may also be used according to the inkjet module chosen and specific application.

The third module ink delivery system can be connected to a sub-tank (not shown, but customary) to provide a faster and constant ink flow to the third module, this aspect depends on the distance of the main tank to the ink supplies. The sub-tank is provided on the printhead 1 and is connected to the main tank (not shown, but customary) through a flexible tube passing through a main energy chain of the gantry system. In total, the third module uses several printheads able to provide a max drop size of 10 nanoliters.

Figure 7 shows a stationary filling station 105, also known as the refiller or infiller. The refiller is loaded with powder using a pneumatic vacuum conveyor and a rotary valve to adjust the amount of powder (shown now, but customary). The pneumatic vacuum conveyor provides powder from a powder silo and a sieve to remove impurities and particles larger than a certain amount, particles larger than a certain amount could get blocked in the recoater. The infiller is a component of the 3D printing system cyclically refilling powder inside the recoating system. When the powder container of the recoater is nearly empty, the printing system will move to the infiller unit. The aim is to fill in the powder container of recoater quickly to avoid delays in printing different layers. Preferably, the filling station is assembled with the gantry along at a position proximal to the starting point of printing a new layer. To this end the filling station can be connected to the same surface onto which the gantry rests in raised from the surface to allow the printhead 1 to be extended partially underneath the filling station 105 so that the first module 4 is able to be filled from the top by the filling station. It was found that the stationary filling station is preferably filled at a rate of 0.15 liter/sec to allow the station to spread the powder adequately along its length and to prevent overflow or an uneven distribution of powder. The filling station has a screw conveyor (not shown, but customary) which extends along the length of the filling station. The screw conveyor is arranged to deposit powder uniformly along the width of the infiller by rotation around its axis. After printing cycles, every 2-50, such as 5-15 layers, the end-effector will move to the infiller. The powder container of the recoater will be filled from the top. This guaranties rapid filling of the container and minimizes the delay in printing. The infiller unit is in Figures 2 and 7 installed on the floor using concrete anchors and structural profiles. This is optional.

The vacuum conveyor and rotary valve could also be mounted on top of the beam and move along the X direction allowing an even quicker refill of powder directly inside the recoater. This option is advisable only in some cases where for instance it is possible to install a long tube for powder refill.

**The second module 5** is shown in greater detail in Figure 5. This module has a roller 5.1 which can rotate freely around its axis with a precision of. The roller has connector portions 5.2 at its distal ends with which it can be connected to the second face of the support module 2. Optionally, the roller can be replaced with a blade, such as a doctor blade, to reduce the amount of moving components and decrease the total weight.

The roller spreader allows to create a very precise layer and compaction of the powder.

Figure 7 additionally shows a stationary cleaning station 106, also referred to as a service station, designed for cleaning the printhead 1. The service station includes a portion 106.1 to purge and clean the printheads. This happens before starting the print and during the printing process to ensure a good quality of the print. The intervals at which cleaning happen and the purging pressure will be adjustable through the software interface according to the fluid used in the process. Purging may occur using a fluid, and the head may be dried. Waste fluids may be collected in a bottom portion 106.2 of the cleaning station. The cleaning station may comprise a waste collection volume 106.3 to which it is fluidly connected, and which volume is placed outside of the printing area and not underneath the gantry, for draining the waste fluid thereto. This beneficially prevents any spillage and contamination of the print bed by stray droplets and dust particles. Additionally, the portion 106.1 may comprise a wiper which cleans the printhead to leave substantially no fluid residues and to remove any powder residues. To this end the cleaning station may comprise a pump unit (not shown, but customary). The service station unit is installed on the floor using concrete anchors and structural profiles, but is installed so that the printhead can be lowered onto the portion 106.1, wherein the portion may be designed as a longitudinal opening between two bars or upstanding wall sections to at least partially shield a portion of the printhead from the environment during cleaning.

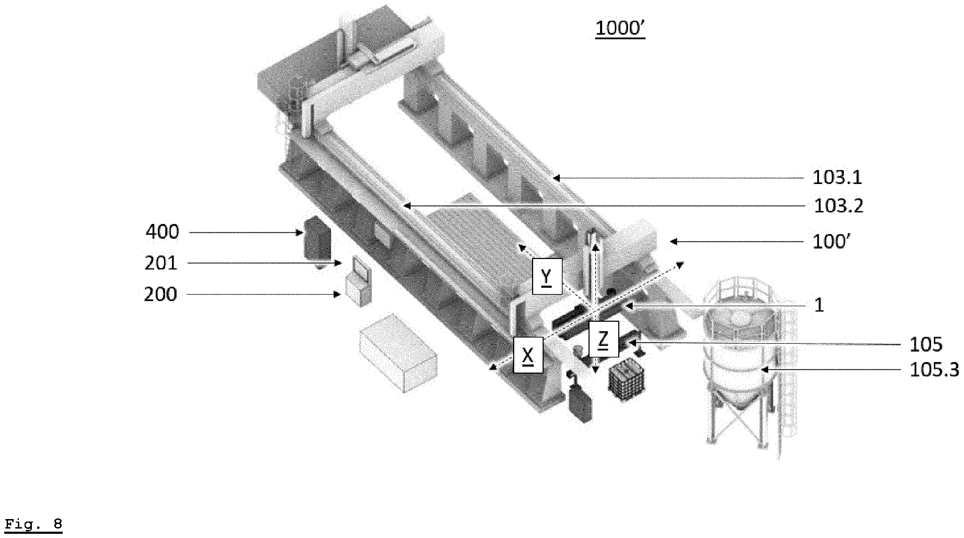

Figure 8 shows another example of the system 1000' according to the invention. The system 1000' merely differs from the system 1000 of Figure 2 in that the at least one track 103 of the gantry comprises two parallel tracks 103.1, 103.2. In all other regards the same features mentioned in association with the system 1000' of Figure 4A can be implementable in the system of Figure 2. Here too the gantry 100' comprises a vertical carrier arm 101 fixed to said printhead 1, and wherein the gantry is arranged for reversibly moving the carrier arm in one vertical direction Z and one horizontal direction Y. The elongated support module 2 longitudinally extends in another horizontal direction X, preferably substantially perpendicular to the one horizontal direction Y, so that the length of the longitudinal support module is substantially equal to the width of the printed layer.

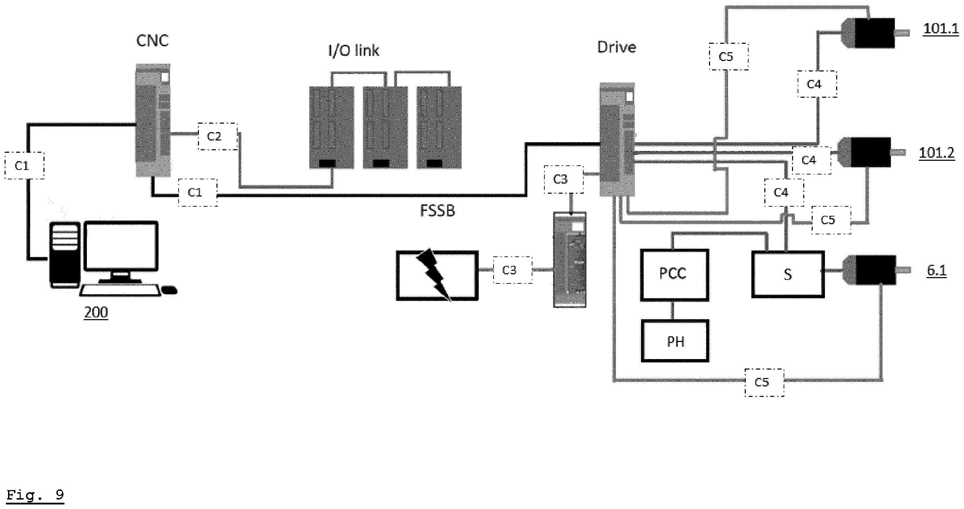

Figure 9 shows the electromechanical system, junction boxes and cables. The 3D-printing system may use a standalone controller (Programmable Machine Control) and CNC (Computerized Numerical Control). The system is designed to be modularly adjusted, interfaced and integrated to work with any existing CNC controller on the market using. The system can also be integrated in hybrid system to allow milling, automatic depowdering and other industrial CNC machining industrial operations. In this figure the computer 200 is provided with a control program the asserts its control on any of the mentioned systems via the drawn connections. The movement of the printhead 1 through the three dimensions is governed by X, Y and Z-axis actuators within the system. The X-axis actuator being the actuator 6.1, shown in Figure 1A, that moves the third module 6 along the length of the support module 2, the Y-axis actuator being the actuator 101.2, only shown in Figure 9, that moves the carriage 102 along its at least one track 103, and the Z-axis actuator being the actuator 101.1, as shown in Figure 2, that moves the vertical support arm 101 up and down. The inkjet system, that is to say the third module 6, can use an encoder signal S1 to synchronize the firing of the droplets with the X-directional movement to achieve a position dependent actuation of each nozzle of the printhead.

Optionally it is possible to connect the motor encoder of the X-axis to a pulse splitter S for incremental encoder signals inkjet system. In this example, though other communicative connection arrangement may also be used C1 represents an optical fiber cable, C2 represents an I/O module cable, C3 represents a power cable, C4 an encoder cable and C5 a servo power cable. The electrical system includes a cabinet 400 with all the components of the electrical system like drives, I/O modules, control unit and junction boxes. Such a cabinet 400 is only shown in Figure 8, but would also be present in the system of Figure 2. The separate cabinet allows to easily integrate the 3d printing system in any existing gantry.

The junction boxes allow the customer to directly plug the cables to the different systems and customize the length of the cables according to the final requirements and final position of the components.

Separately, from all the above the computer 200 may be preloaded with a software that executes all steps of the printing operation, refilling, and cleaning.

## Claims

1. A modular 3D-printing end-effector (1) for binder jet three-dimensional printing using a gantry (100) comprising:
- an elongated support module (2) comprising a mounting portion (3) for being mounted to a vertical carrier arm (101) of a gantry (100) to, in use, longitudinally extend in a substantially horizontal direction,
- a first module (4) for depositing a powder layer with a mass median diameter (D₅₀) between 1 and 500 micron;
- a second module (5) for evening a height of said powder layer; and
- a third module (6), being an inkjet system with a space between nozzles of 30 to 500 micron and a droplet size of 40 picoliters to 10 nanoliters, for providing a binder fluid to said evened powder layer to form a printed layer, and
wherein the first, second, and third module are each connected to a mutually different lateral face of the elongated support module (2),
such that in a horizontal printing motion the first, second and third module pass over a same area in a sequence of first to second to third, and wherein the third module comprises an actuator for moving the third module along the length of the support module.

2. The end-effector according to claim 1, wherein the support module comprises a plurality of recesses which extend in the longitudinal direction of the support module, and wherein each of the first, second and third modules are connected to the support module via at least one of said plurality of recesses.

3. The end-effector according to any of claims 1-2, wherein the mounting portion (3) is centered along the length of the support module, and is arranged for receiving the distal end of the vertical carrier arm (101) to allow the central support module to form an inverted T-shaped support structure with said vertical carrier arm (101).

4. The end-effector according to claim 3, wherein the mounting portion comprises at least one electrical junction box arranged on a lateral face thereof.

5. The end-effector according to any of claims 1-4, wherein the elongated support module forms a cuboid support beam, wherein preferably the beam envelopes a hollow inner volume which substantially extends uninterrupted along its entire length.

6. A system (1000) of:
- a gantry (100) extending over a support surface for three-dimensional printing, wherein the support surface is fixed in height or a robotic unit with two to six degrees of freedom; and
- an end-effector according to any one of claims 1-5, and
- a computer (200), a human interface and an electrical system (201) communicatively connected, for controlling the movement of the vertical carrier arm, as well as the operation of the first, second and third modules,
wherein the gantry or robotic unit comprises a carrier arm (101) fixed to said end-effector (1), and wherein the gantry is arranged for reversibly moving the carrier arm in one vertical direction (Z) and one horizontal direction (Y),
wherein the elongated support module (2) longitudinally extends in another horizontal direction (X), preferably substantially perpendicular to the one horizontal direction (Y), so that the length of the longitudinal support module is substantially equal to the width of the printed layer.

7. The system according to claim 6, comprising a raised stationary filling station (105) designed for filling the first module with powder only when the end-effector is in a filling position, and wherein the system is designed for moving the printing head to said filling position underneath the filling station when the system has deposited a predetermined number of printed layers.

8. The system according to claim 7, wherein the first module comprises an upper opening for receiving powder, wherein the opening substantially extends along the entire length of the first module, and wherein the filling station comprises a lower opening which is substantially equal in length to the upper opening of the first module, and wherein the filling station comprises a screw conveyor for depositing the powder substantially uniformly along the length of the first module.

9. The system according to claim 6, comprising a filling station integrated with the end-effector and fluidly connected to a repository of powder which is external to the system for the pneumatic delivery of powder from said repository to the first module.

10. The system according to any one of claims 6-9, comprising a stationary cleaning station (106) designed for cleaning the end-effector (1) only when the end-effector is in a cleaning position on top of or over the cleaning station, and wherein the system is designed for moving the printing head to said cleaning position prior to printing and at an interval of time or printed layers during printing, wherein said interval is adjustable through the human interface.

11. The system according to any one of claims 6-10, comprising a stationary main tank for holding binder fluid, and wherein a secondary tank for holding binder fluid is provided to the end-effector (1) or vertical arm (101), and wherein the secondary tank is replenished from the main tank through a flexible fluid connection, wherein the third module is designed to receive or draw binder fluid from said secondary tank and comprises a plurality of inkjet modules for delivering said binder fluid to the evened powder layer.

12. The system according to claim 11, wherein each inkjet module is comprising 8 printheads (PH), each designed for a printing density of at least 25-720 dots-per-inch, preferably 400 dots-per-inch, and arranged with 8 head driver cards and 1 inkjet controller card for a synchronized operation.

13. A computer implemented method for binder jet 3D-printing using the system according to any one of claims 6-12 comprising the steps of:
a) depositing a powder layer using the end-effector;
b) evening the height of said powder layer using the end-effector;
c) providing a binder fluid to said evened powder layer to form a printed layer using the end-effector;
d) raising the end-effector a predefined height; and repeating steps a-d until a printed three-dimensional structure is completed,
wherein steps a-c occur simultaneously to different parts of the same layer during a movement of the end-effector in the one horizontal direction (Y).

14. The method according to claim 13 using a system according to claim 8, or any one of claims 10-12 and claim 8, further comprising the step of:
e) filling the first module with powder at a filling position, wherein step e occurs after a predetermined number of repetitions of steps a-c.

## Patentansprüche

1. Modularer 3D-Druck-Endeffektor (1) für den dreidimensionalen Bindemittelstrahldruck unter Verwendung einer Brücke (100), der aufweist:
- ein längliches Trägermodul (2), das einen Montageabschnitt (3) aufweist, um an einem vertikalen Trägerarm (101) einer Brücke (100) befestigt zu werden, um sich im Gebrauch in einer im Wesentlichen horizontalen Richtung zu erstrecken,
- ein erstes Modul (4) zum Aufbringen einer Pulverschicht mit einem Medianmassendurchmesser (DSO) zwischen 1 und 500 Mikrometern;
- ein zweites Modul (5) zum Glätten einer Höhe der Pulverschicht; und
- ein drittes Modul (6), bei dem es sich um ein Tintenstrahlsystem mit einem Abstand zwischen den Düsen von 30 bis 500 Mikrometern und einer Tröpfchengröße von 40 Pikolitern bis 10 Nanolitern handelt, um ein Bindemittelfluid auf die geglättete Pulverschicht aufzubringen, um eine gedruckte Schicht zu bilden, und
wobei das erste, zweite und dritte Modul jeweils mit einer voneinander verschiedenen Seitenfläche des länglichen Trägermoduls (2) verbunden sind, so dass bei einer horizontalen Druckbewegung das erste, zweite und dritte Modul über einen selben Bereich in einer Reihenfolge vom ersten zum zweiten zum dritten Modul laufen, und wobei das dritte Modul einen Aktuator zum Bewegen des dritten Moduls entlang der Länge des Trägermoduls aufweist.

2. Endeffektor nach Anspruch 1, wobei das Trägermodul mehrere Ausnehmungen, die sich in Längsrichtung des Trägermoduls erstrecken, aufweist, und wobei von dem ersten, zweiten und dritten Modul jedes über zumindest eine der mehreren Ausnehmungen mit dem Trägermodul verbunden ist.

3. Endeffektor nach einem der Ansprüche 1-2, wobei der Montageabschnitt (3) entlang der Länge des Trägermoduls zentriert ist und zum Aufnehmen des distalen Endes des vertikalen Trägerarms (101) angeordnet ist, um es dem zentralen Trägermodul zu ermöglichen, mit dem vertikalen Trägerarm (101) eine umgekehrte T-förmige Trägerstruktur zu bilden.

4. Endeffektor nach Anspruch 3, wobei der Montageabschnitt zumindest eine elektrische Anschlussdose, die an einer Seitenfläche davon angeordnet ist, aufweist.

5. Endeffektor nach einem der Ansprüche 1-4, wobei das
längliche Trägermodul einen quaderförmigen Trägerbalken bildet, wobei der Balken vorzugsweise ein hohles Innenvolumen, das sich im Wesentlichen ohne Unterbrechung über seine gesamte Länge erstreckt, einhüllt.

6. System (1000) aus:
- einer Brücke (100), die sich über eine Auflagefläche für dreidimensionales Drucken erstreckt, wobei die Auflagefläche in der Höhe fixiert ist, oder einer Robotereinheit mit zwei bis sechs Freiheitsgraden; und
- einem Endeffektor nach einem der Ansprüche 1-5, und
- einem Computer (200), einer Benutzerschnittstelle ("human interface") und einem elektrischen System (201), die zum Steuer der Bewegung des vertikalen Tragarms sowie des Betriebs des ersten, zweiten und dritten Moduls kommunikativ verbunden sind,
wobei die Brücke oder die Robotereinheit einen Trägerarm (101) umfasst, der an dem Endeffektor (1) befestigt ist, und wobei die Brücke zum reversiblen Bewegen des Trägerarms in einer vertikalen Richtung (Z) und einer horizontalen Richtung (Y) angeordnet ist,
wobei sich das längliche Trägermodul (2) in Längsrichtung in einer anderen horizontalen Richtung (X) erstreckt, vorzugsweise im Wesentlichen senkrecht zu der einen horizontalen Richtung (Y), so dass die Länge des länglichen Trägermoduls im Wesentlichen gleich der Breite der bedruckten Schicht ist.

7. System nach Anspruch 6, das eine angehobene stationäre Füllstation (105) aufweist, die dazu ausgelegt ist, das erste Modul nur dann mit Pulver zu befüllen, wenn sich der Endeffektor in einer Füllposition befindet, und wobei das System dazu ausgelegt ist, den Druckkopf in die Füllposition unterhalb der Füllstation zu bewegen, wenn das System eine vorbestimmte Anzahl gedruckter Schichten aufgebracht hat.

8. System nach Anspruch 7, wobei das erste Modul eine obere Öffnung zum Aufnehmen von Pulver umfasst, wobei sich die Öffnung im Wesentlichen entlang der gesamten Länge des ersten Moduls erstreckt, und wobei die Füllstation eine untere Öffnung aufweist, die im Wesentlichen die gleiche Länge wie die obere Öffnung des ersten Moduls hat, und wobei die Füllstation einen Schneckenförderer umfasst, um das Pulver im Wesentlichen gleichmäßig entlang der Länge des ersten Moduls aufzubringen.

9. System nach Anspruch 6, das eine in den Endeffektor integrierte Füllstation aufweist und mit einem Pulverbehälter, der sich außerhalb des Systems befindet, fluidverbunden ist, um das Pulver pneumatisch aus dem Behälter in das erste Modul zu befördern.

10. System nach einem der Ansprüche 6-9, das eine stationäre Reinigungsstation (106) aufweist, die dazu ausgelegt ist, den Endeffektor (1) nur dann zu reinigen, wenn sich der Endeffektor in einer Reinigungsposition oben auf oder über der Reinigungsstation befindet, und wobei das System dazu ausgelegt ist, den Druckkopf vor dem Drucken und in einem Intervall oder gedruckten Schichten während des Druckens an die Reinigungsposition zu bewegen, wobei das Intervall über die Benutzerschnittstelle einstellbar ist.

11. System nach einem der Ansprüche 6-10, das einen stationären Haupttank zum Aufnehmen von Bindemittelfluid aufweist, wobei ein sekundärer Tank zum Aufnehmen von Bindemittelfluid an dem Endeffektor (1) oder dem vertikalen Arm (101) vorgesehen ist und wobei der sekundäre Tank durch eine flexible Fluidverbindung von dem Haupttank aufgefüllt wird, wobei das dritte Modul dazu ausgelegt ist, das Bindemittelfluid von dem sekundären Tank zu empfangen oder zu saugen, und mehrere Tintenstrahlmodule zum Abgeben des Bindemittelfluids an die geglättete Pulverschicht aufweist.

12. System nach Anspruch 11, wobei jedes Tintenstrahlmodul 8 Druckköpfe (PH) aufweist, die jeweils für eine Druckdichte von zumindest 25-720 Punkten pro Zoll, vorzugsweise 400 Punkten pro Zoll, ausgelegt sind und mit 8 Kopftreiberkarten und 1 Tintenstrahltreiberkarte für einen synchronisierten Betrieb angeordnet sind.

13. Computerimplementiertes Verfahren zum Binderstrahl-3D-Drucken unter Verwendung des Systems nach einem der Ansprüche 6-12, das die folgenden Schritte aufweist:
a) Auftragen einer Pulverschicht unter Verwendung des Endeffektors;
b) Glätten der Höhe der Pulverschicht unter Verwendung des Endeffektors;
c) Aufbringen eines Bindemittelfluids auf die geglättete
Pulverschicht, um unter Verwendung des Endeffektors eine gedruckte Schicht zu bilden;
d) Anheben des Endeffektors auf eine vordefinierte Höhe; und Wiederholen der Schritte a-d, bis eine gedruckte dreidimensionale Struktur fertiggestellt ist,
wobei die Schritte a-c für verschiedene Teile derselben Schicht während einer Bewegung des Endeffektors in der einen horizontalen Richtung (Y) gleichzeitig erfolgen.

14. Verfahren nach Anspruch 13 unter Verwendung eines Systems nach Anspruch 8 oder einem der Ansprüche 10-12 und Anspruch 8, das weiterhin den folgenden Schritt aufweist:
e) Füllen des ersten Moduls mit Pulver an einer Füllposition, wobei Schritt e nach einer vorbestimmten Anzahl von Wiederholungen der Schritte a-c erfolgt.

## Revendications

1. Effecteur terminal (1) modulaire pour une impression 3D pour une impression tridimensionnelle par jet de liant utilisant un portique (100) comprenant :
- un module de support allongé (2) comprenant une partie de montage (3) destinée à être montée sur un bras (101) porteur vertical d'un portique (100) pour, en utilisation, s'étendre longitudinalement dans une direction sensiblement horizontale,
- un premier module (4) destiné à déposer une couche de poudre avec un diamètre moyen en masse (D₅₀) entre 1 et 500 microns ;
- un deuxième module (5) destiné à homogénéiser une hauteur de ladite couche de poudre ; et
- un troisième module (6), qui est un système à jet d'encre avec un espace entre des buses de 30 à 500 microns et une taille de gouttelettes de 40 picolitres à 10 nanolitres, destiné à fournir un fluide liant à ladite couche de poudre homogénéisée pour former une couche imprimée, et
dans lequel le premier, le deuxième et le troisième module sont reliés chacun à une face latérale mutuellement différente du module de support allongé (2),
de sorte que dans un déplacement d'impression horizontal le premier, le deuxième et le troisième module passent au-dessus d'une même zone dans une séquence de premier à deuxième à troisième, et dans lequel le troisième module comprend un actionneur destiné à déplacer le troisième module le long de la longueur du module de support.

2. Effecteur terminal selon la revendication 1, dans lequel le module de support comprend une pluralité d'évidements qui s'étendent dans la direction longitudinale du module de support, et dans lequel chacun des premier, deuxième et troisième modules sont reliés au module de support via au moins un de ladite pluralité d'évidements.

3. Effecteur terminal selon l'une quelconque des revendications 1 et 2, dans lequel la partie de montage (3) est centrée le long de la longueur du module de support, et est agencée pour recevoir l'extrémité distale du bras (101) porteur vertical pour permettre au module de support central de former une structure de support en forme de T inversé avec ledit bras (101) porteur vertical.

4. Effecteur terminal selon la revendication 3, dans lequel la partie de montage comprend au moins une boîte de jonction électrique agencée sur une face latérale de celle-ci .

5. Effecteur terminal selon l'une quelconque des revendications 1 à 4, dans lequel le module de support allongé forme une poutre de support cuboïde, dans lequel de préférence la poutre enveloppe un volume intérieur creux qui s'étend sensiblement ininterrompu le long de sa longueur entière.

6. Système (1000) constitué de :
- un portique (100) s'étendant au-dessus d'une surface de support pour une impression tridimensionnelle, dans lequel la surface de support est fixée en hauteur ou une unité robotique avec deux à six degrés de liberté ; et
- un effecteur terminal selon l'une quelconque des revendications 1 à 5, et
- un ordinateur (200), une interface humaine et un système électrique (201) connectés de manière à communiquer, destinés à commander le déplacement du bras porteur vertical, ainsi que le fonctionnement des premier, deuxième et troisième modules,
dans lequel le portique ou l'unité robotique comprend un bras (101) porteur fixé audit effecteur terminal (1), et dans lequel le portique est agencé pour déplacer de manière réversible le bras porteur dans une direction verticale (Z) et une direction horizontale (Y),
dans lequel le module de support allongé (2) s'étend longitudinalement dans une autre direction horizontale (X), de préférence sensiblement perpendiculaire à la direction horizontale (Y), de façon à ce que la longueur du module de support longitudinal soit sensiblement égale à la largeur de la couche imprimée.

7. Système selon la revendication 6, comprenant une station de remplissage fixe surélevée (105) conçue pour remplir le premier module avec de la poudre uniquement lorsque l'effecteur terminal est dans une position de remplissage, et dans lequel le système est conçu pour déplacer la tête d'impression jusqu'à ladite position de remplissage en dessous de la station de remplissage lorsque le système a déposé un nombre prédéterminé de couches imprimées.

8. Système selon la revendication 7, dans lequel le premier module comprend une ouverture supérieure destinée à recevoir de la poudre, dans lequel l'ouverture s'étend sensiblement le long de la longueur entière du premier module, et dans lequel la station de remplissage comprend une ouverture inférieure qui est sensiblement égale en longueur à l'ouverture supérieure du premier module, et dans lequel la station de remplissage comprend un transporteur à vis destiné à déposer la poudre sensiblement uniformément le long de la longueur du premier module.

9. Système selon la revendication 6, comprenant une station de remplissage intégrée à l'effecteur terminal et reliée de manière fluidique à un réceptacle de poudre qui est externe au système pour la délivrance pneumatique de poudre à partir dudit réceptacle jusqu'au premier module.

10. Système selon l'une quelconque des revendications 6 à 9, comprenant une station de nettoyage fixe (106) conçue pour nettoyer l'effecteur terminal (1) uniquement lorsque l'effecteur terminal est dans une position de nettoyage sur le dessus de ou au-dessus de la station de nettoyage, et dans lequel le système est conçu pour déplacer la tête d'impression jusqu'à ladite position de nettoyage avant l'impression et à un intervalle de temps ou des couches imprimées durant l'impression, dans lequel ledit intervalle est réglable par le biais de l'interface humaine.

11. Système selon l'une quelconque des revendications 6 à 10, comprenant un réservoir principal fixe destiné à contenir un fluide liant, et dans lequel un réservoir secondaire destiné à contenir un fluide liant est fourni à l'effecteur terminal (1) ou au bras (101) vertical, et dans lequel le réservoir secondaire est rerempli à partir du réservoir principal par le biais d'une liaison fluidique flexible, dans lequel le troisième module est conçu pour recevoir ou aspirer un fluide liant à partir dudit réservoir secondaire et comprend une pluralité de modules à jet d'encre destinés à délivrer ledit fluide liant à la couche de poudre homogénéisée.

12. Système selon la revendication 11, dans lequel chaque module à jet d'encre comprend 8 têtes d'impression (PH), chacune conçue pour une densité d'impression d'au moins 25 à 720 points par pouce, de préférence 400 points par pouce, et agencée avec 8 cartes de circuits de commande de têtes et 1 carte de dispositif de commande de jet d'encre pour un fonctionnement synchronisé.

13. Procédé mis en œuvre par ordinateur pour une impression 3D par jet de liant utilisant le système selon l'une quelconque des revendications 6 à 12 comprenant les étapes consistant à :
a) déposer une couche de poudre en utilisant l'effecteur terminal ;
b) homogénéiser la hauteur de ladite couche de poudre en utilisant l'effecteur terminal ;
c) fournir un fluide liant à ladite couche de poudre homogénéisée pour former une couche imprimée en utilisant l'effecteur terminal ;
d) surélever l'effecteur terminal à une hauteur prédéfinie ; et répéter les étapes a à d jusqu'à ce qu'une structure tridimensionnelle imprimée soit terminée,
dans lequel les étapes a à c ont lieu simultanément sur différentes parties de la même couche durant un déplacement de l'effecteur terminal dans la direction horizontale (Y).

14. Procédé selon la revendication 13 utilisant un système selon la revendication 8, ou l'une quelconque des revendications 10 à 12 et la revendication 8, comprenant en outre l'étape consistant à :
e) remplir le premier module avec de la poudre à une position de remplissage, dans lequel l'étape e a lieu après un nombre prédéterminé de répétitions des étapes a à c.
